(19) Europäisches Patentamt
European Patent Office
Office européen des brevets

(11) **EP 1 983 688 B1**

(12) **EUROPEAN PATENT SPECIFICATION**

(45) Date of publication and mention
of the grant of the patent:
**25.04.2012 Bulletin 2012/17**

(51) Int Cl.:
*H04L 12/26* (2006.01)     *H04L 12/24* (2006.01)

(21) Application number: **07817016.4**

(86) International application number:
**PCT/CN2007/070825**

(22) Date of filing: **29.09.2007**

(87) International publication number:
**WO 2008/043304 (17.04.2008 Gazette 2008/16)**

(54) **METHOD FOR DETECTING QOS**

VERFAHREN ZUR FESTSTELLUNG EINER DIENSTGÜTE

MÉTHODE DE DÉTECTION DE QUALITÉ DE SERVICE

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **29.09.2006 CN 200610062951**

(43) Date of publication of application:
**22.10.2008 Bulletin 2008/43**

(73) Proprietor: **Huawei Technologies Co., Ltd.**
**Longgang District, Shenzhen**
**Guangdong 518129 (CN)**

(72) Inventor: **LU, Yonggang**
**Shenzhen Guangdong 518129 (CN)**

(74) Representative: **Hengelhaupt, Jürgen et al**
**Gulde Hengelhaupt Ziebig & Schneider**
**Patentanwälte - Rechtsanwälte**
**Wallstrasse 58/59**
**10179 Berlin (DE)**

(56) References cited:
**CN-A- 1 627 747         CN-A- 1 658 611**
**US-A1- 2003 206 517     US-A1- 2005 073 961**
**US-B1- 6 678 250        US-B1- 6 912 216**
**US-B1- 6 912 216**

EP 1 983 688 B1

## Description

This application claims a priority to the Chinese Patent Application No. 200610062951.7, filed with the Chinese Patent Office on September 29, 2006 and entitled "Method for Detecting QoS".

FIELD OF THE INVENTION

The present invention relates to the field of communication technologies, and in particular to a method for detecting QoS.

BACKGROUND

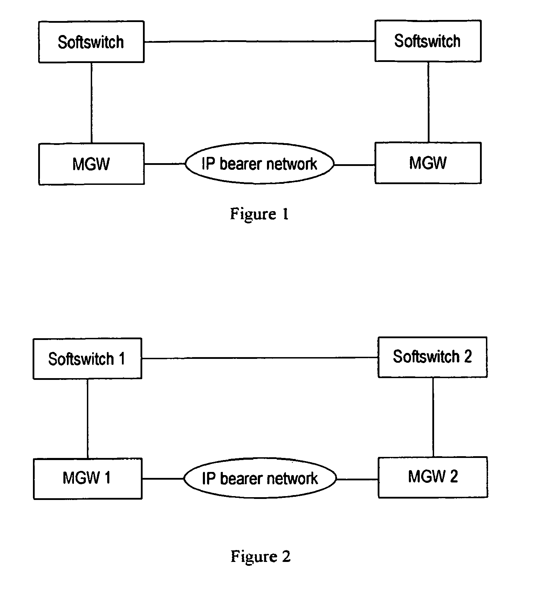

As shown in Figure 1, a typical NGN architecture includes a softswitch and a media gateway (MGW). The softswitch is responsible for call control and the MGW is responsible for conversion of bearer media such as IP. Such devices are in communication with an IP network, and communicate with each other through the IP bearer media. In an IP network, quality of transmission between two packet devices or the bearer quality of data equipment may be deteriorated due to insufficient bearer bandwidth, network channel interruption or network attack. If the Quality of Service (QoS) of the bearer network is not detected in real time, all services will be deteriorated in QoS or even fail. Therefore, it is essential for an MGW to monitor and detect the QoS of an IP bearer network in real time.

The RFC1889 defines some indices such as packet loss ratio, jitter, and delay for measuring the QoS of the IP bearer network. However, the RFC 1889 does not describe how to use packet loss ratio, jitter and delay to calculate the overall QoS of an IP bearer network. The bearer network QoS indices (packet loss ratio, jitter, delay) calculated out through the Real-time Transport Control Protocol (RTCP) is specific to a single channel of calls, and cannot reflect the IP bearer network QoS of the whole office direction. A US application US 2003/206517 AI discloses a method for dynamic optimization of service quality in a data transmission network.

US 6678250 B1 discloses gateway routers for real-time networks having the ability to collect delay, loss and jitter statistics on a per-connection basis. It further describes a method for monitoring and managing the performance of a real-time data network that supports voice, video and other real-time services.

SUMMARY

The present invention provides a method for detecting QoS, through which the IP bearer network QoS of the whole office direction can be obtained.

An embodiment of the present invention provides a method for detecting QoS, including:

A. obtaining information in packets transferred between MGWs, and obtaining packet loss ratio, jitter and delay of each channel of users in an office direction in communication with the MGWs through the obtained information, the office direction is specified by a softswitch in a delivered message;

B. calculating out average packet loss ratio, average delay and average jitter of the office direction according to the packet loss ratio, the jitter and the delay of each channel of users (500); and

C. obtaining overall QoS of the office direction according to the average packet loss ratio, the average delay and the average jitter of the office direction as well as weight coefficients of the average packet loss ratio, the average delay and the average jitter of the office direction affecting the voice quality (600).

Step A further includes:

A1. sending, by a first MGW, packets which indicate each channel of users in the specified office direction in communication with the first MGW to a second MGW through an IP bearer network, in which the packets carry the users' local time and serial numbers (100);

A2. obtaining, by the second MGW, the users' packet loss ratio according to the recorded serial number and the received packets, upon receiving the packets sent by the first MGW (200);

A3. sending, by the second MGW, packets which indicate each channel of users in the specified office direction in communication with the second MGW to the first MGW through the IP bearer network, in which the packets carry local time and serial number of the second MGW, the time of receiving the packets from the first MGW, and the obtained users' packet loss ratio (300); and

A4. by the first MGW, obtaining the users' packet loss ratio, and calculating the delay and the jitter according to the local time of receiving the packets and timestamp carried in the packets, upon receiving the packets sent by the second MGW(400).

The packet loss ratio is obtained in the following way: the quantity of packets that should be received in the statistic period deducts the quantity of packets actually received in the statistic period, and then the quantity after deduction is divided by the quantity of packets that should be received in the statistic period.

The quantity of packets that should be received in the statistic period is obtained in the following way: the maximum packet serial number in the statistic period deducts the maximum packet serial number in the previous statistic period.

The delay is calculated through the following formula:

$$Delay = (T4-T1) - (T3 - T2)$$

wherein:

T1 is the time when a first MGW sends a packet; T2 is the time when a second MGW receives the packet; T3 is the time when the second MGW sends a packet; T4 is the time when the first MGW receives the packet.

The jitter is obtained according to the change of delay.

The average packet loss ratio, the average delay, and the average jitter are calculated according to the following formulas:

$$\text{average packet loss ratio in the specified office direction} = \sum_{1}^{user\ quantity\ in\ specified\ office\ direction} packet\ loss\ ratio\ of\ each\ user / user\ quantity\ in\ specified\ office\ direction;$$

$$\text{average delay in the specified office direction} = \sum_{1}^{user\ quantity\ in\ specified\ office\ direction} delay\ of\ each\ user / user\ quantity\ in\ specified\ office\ direction;$$

$$\text{average jitter in the specified office direction} = \sum_{1}^{user\ quantity\ in\ specified\ office\ direction} jitter\ of\ each\ user / user\ quantity\ in\ specified\ office\ direction;$$

wherein user quantity means the number of users.

The average packet loss ratio affects voice quality greatly. The average delay and average jitter affect voice quality slightly.

The packet is an RTCP packet.

The packet is sent periodically.

The technical solution of the present invention has the following beneficial effects:

The method for detecting IP bearer network QoS in an embodiment of the present invention includes:

(i) obtaining the packet loss ratio, jitter and delay of each channel of users in communication with the MGWs according to the information in the packets transferred between MGWs;

(ii) obtaining the average packet loss ratio, average delay and average jitter of the office direction according to the packet loss ratio, jitter and delay of each channel of users; and

(iii) obtaining the IP bearer network QoS of the whole office direction according to the weight of the average packet loss ratio, the average delay and the average jitter of the office direction affecting the voice quality, so as to take pertinent measures to notify the softswitch of handling the services differently, improve the real-time monitoring capability of the MGW for monitoring an IP network, and guarantee QoS of existing services.

BRIEF DESCRIPTION OF THE DRAWINGS

Figure 1 is a block diagram of the NGN architecture in the related art;

Figure 2 is a block diagram of the NGN architecture according to an embodiment of the present invention; and

Figure 3 is a flowchart of a method for detecting QoS according to an embodiment of the present invention.

DETAILED DESCRIPTION

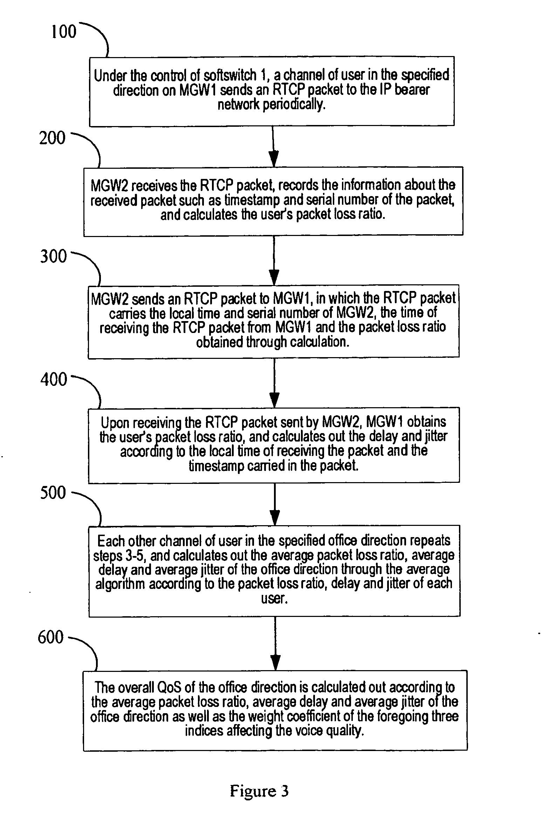

The technical solution of the present invention tests the QoS in a specified office direction by parsing the information in the RTCP packet transferred between MGWs. Referring to Figure 2 and Figure 3, the whole process is described below by taking MGW1 and MGW2 as an example.

In Step 100, under the control of softswitch 1, MGW1 sends Real-time Transport Control Protocol (RTCP) packets which indicate a channel of users in an office direction to the IP bearer network periodically, in which the RTCP packets carry the users' local time and serial numbers, the channel of users is in communication with MGW1, and the office direction is specified by softswitch 1 in the delivered message.

In Step 200, MGW2 receives the RTCP packets sent by MGW1 from the IP bearer network, records the information in the received packets such as timestamps and serial numbers of the packets, and calculates the users' packet loss ratio according to the recorded serial numbers and the received RTCP packets, where the packet loss ratio is calculated according to the following formulae:

$$\text{packet loss ratio} = (\text{quantity of packets that should be received in the statistic period} - \text{quantity of packets actually received in the statistic period})/ \text{quantity of RTCP packets that should be received in the statistic period}$$

$$\text{quantity of packets that should be received in the statistic period} = \text{maximum packet serial number in the statistic period} - \text{maximum packet serial number in the previous statistic period}$$

In Step 300, under the control of softswitch 2, MGW2 sends RTCP packets to MGW1 periodically, in which the RTCP packets carry the local time and serial number of MGW2, the time of receiving the RTCP packets from MGW1 and the packet loss ratio obtained through calculation.

In Step 400, upon receiving the RTCP packets sent by MGW2, MGW1 obtains the users' packet loss ratio, and calculates delay and jitter according to the local time of the received RTCP packets and the timestamps carried in the packets according to the following formulas:

$$\text{Delay} = (T4-T1) - (T3 - T2)$$

wherein,

T1 is the time when MGW1 sends an RTCP packet; T2 is the time when MGW2 receives the RTCP packet; T3 is the time when MGW2 sends an RTCP packet; T4 is the time when MGW1 receives the RTCP packet.

Jitter is change of delay. It is supposed that A, B, C and D are times when four packets arrive at MGW2 respectively. B-A is a first delay t1, C-B is a second delay t2, and D-C is a third delay t3. If t1 = t2 = t3, jitter is 0; if t2 is not equal to t1, t2-t1 is the jitter value. If the jitter is considerable, the voice quality will be affected.

In Step 500, each other channel of users in the specified office direction repeats steps 100 to 400, and calculates out average packet loss ratio, average delay and average jitter of the office direction through average algorithm according to the packet loss ratio, the delay and the jitter of each users.

$$\text{Average packet loss ratio in the specified office direction} = \sum_{1}^{user\ quantity\ in\ specified\ office\ direction} packet\ loss\ ratio\ of\ each\ user \text{ /user quantity in specified office direction;}$$

$$\text{Average delay in the specified office direction} = \sum_{1}^{user\ quantity\ in\ specified\ office\ direction} delay\ of\ each\ user \text{ /user quantity in specified office direction; and}$$

$$\text{Average jitter in the specified office direction} = \sum_{1}^{user\ quantity\ in\ specified\ office\ direction} jitter\ of\ each\ user \text{ /user quantity in specified office direction.}$$

In Step 600, the overall QoS of the office direction is calculated according to the average packet loss ratio, the average delay and the average jitter of the office direction as well as the weight coefficient of the previous three indices affecting the voice quality, in which the packet loss ratio affects voice quality greatly, and delay and jitter affect voice quality slightly.

Overall QoS in the specified office direction = Q (average packet loss ratio, average delay, and average jitter of the office direction)

Q (packet loss ratio) Level 0 ---- Packet loss ratio is 0%
Level 1 ---- Packet loss ratio is 3-5%
Level 2 ---- Packet loss ratio is 5-8%
Level 3 ---- Packet loss ratio is 8-15%
Level 4 ---- Packet loss ratio is 15-30%
Level 5 ---- Packet loss ratio is over 30%
Q (delay) Level 0 ---- Delay is less than a preset threshold
Level 1 ---- Delay is greater than a preset threshold
Q (jitter) Level 0 ---- Jitter is less than a preset threshold
Level 1 ---- Jitter is greater than a preset threshold

The overall QoS of the specified office direction is obtained according to the previous process.

The above are preferred embodiments of the present invention. It is not intended to limit the scope of the present invention to these embodiments. Variations and replacements conceivable to those skilled in the art of the present invention should fall into the protection scope of the present invention, and the scope of the present invention is defined by the accompanying claims.

**Claims**

1. A method for detecting QoS, comprising obtaining information in Real-time Transfer Control Protocol (RTCP) packets transferred between media gateways MGWs; and
obtaining packet loss ratio, jitter and delay of each channel of users in an office direction in communication with the MGWs through the obtained information, the office direction is specified by a softswitch in a delivered message; **characterized by** the method further comprising:

   calculating out average packet loss ratio, average delay and average jitter of the office direction according to the packet loss ratio, the jitter and the delay of each channel of users (500); and
   obtaining overall QoS of the office direction according to the average packet loss ratio, the average delay and the average jitter of the office direction as well as weight coefficients of the average packet loss ratio, the average delay and the average jitter of the office direction affecting the voice quality (600).

2. The method for detecting QoS according to claim 1, wherein the process of obtaining information in the packet transferred between MGWs, and obtaining the packet loss ratio, the jitter and the delay of each channel of users in the office direction in communication with the MGWs through the obtained information comprises:

   sending, by a first MGW, packets which indicate each channel of users in the specified office direction in communication with the first MGW to a second MGW through an IP bearer network, in which the packets carry the users' local time and serial numbers (100);
   obtaining, by the second MGW, the users' packet loss ratio according to the recorded serial number and the received packets, upon receiving the packets sent by the first MGW(200);

3. The method for detecting QoS according to claim 1 or claim 2, wherein the packet loss ratio is obtained in the following way: from the quantity of packets that should be received in the statistic period the quantity of packets actually received in the statistic period is deducted, and then the quantity after deduction is divided by the quantity of packets that should be received in the statistic period.

4. The method for detecting QoS according to claim 3, wherein the quantity of packets that should be received in the statistic period is obtained in the following way: from the maximum packet serial number in the statistic period the maximum packet serial number in the previous statistic period is deducted.
sending, by the second MGW, packets which indicate each channel of users in the specified office direction in communication with the second MGW to the first MGW through the IP bearer network, in which the packets carry local time and serial number of the second MGW, the time of receiving the packets from the first MGW, and the obtained users' packet loss ratio (300); and
by the first MGW, obtaining the users' packet loss ratio, and calculating the delay and the jitter according to the local time of receiving the packets and timestamp carried in the packets, upon receiving the packets sent by the second MGW (400).

5. The method for detecting QoS according to claim 1 or claim 2, wherein the delay is calculated according to the following formula:

$$\text{Delay} = (T4-T1) - (T3 - T2)$$

wherein T1 is the time when a first MGW sends a packet; T2 is the time when a second MGW receives the packet; T3 is the time when the second MGW sends a packet; T4 is the time when the first MGW receives the packet.

6. The method for detecting QoS according to claim 5, wherein the jitter is obtained according to the change of delay.

7. The method for detecting QoS according to claim 1, wherein the average packet loss ratio, the average delay and the average jitter are calculated according to the following formulas:

average packet loss ratio in the specified office direction

$$= \frac{\sum_{1}^{user\ quantity\ in\ specified\ office\ direction} packet\ loss\ ratio\ of\ each\ user}{}\ /user\ quantity\ in\ specified$$

office direction;

average delay in the specified office direction

$$= \frac{\sum_{1}^{user\ quantity\ in\ specified\ office\ direction} delay\ of\ each\ user}{}\ /user\ quantity\ in\ specified\ office\ direction;\ and$$

average jitter in the specified office direction

$$= \frac{\sum_{1}^{user\ quantity\ in\ specified\ office\ direction} jitter\ of\ each\ user}{}\ /user\ quantity\ in\ specified\ office\ direction;$$

wherein user quantity means number of users.

8. The method for detecting QoS according to claim 1, claim 2, claim 4 or claim 6, wherein the packet is sent periodically.

9. An apparatus when programmed for carrying out the method of claim 1 for detecting QoS, comprising means for obtaining information in Real-time Transfer Control Protocol (RTCP) packets transferred between media gateways MGWs; and
means for obtaining packet loss ratio, jitter and delay of each channel of users in an office direction in communication with the MGWs through the obtained information, the office direction is specified by a softswitch in a delivered message;
**characterized by** the apparatus further comprising:

means for calculating out average packet loss ratio, average delay and average jitter of the office direction according to the packet loss ratio, the jitter and the delay of each channel of users (500); and
means for obtaining overall QoS of the office direction according to the average packet loss ratio, the average delay and the average jitter of the office direction as well as weight coefficients of the average packet loss ratio, the average delay and the average jitter of the office direction affecting the voice quality (600).

10. The apparatus according to claim 9 wherein means for obtaining information in the packets transferred between MGWs, and obtaining the packet loss ratio, the jitter and the delay of each channel of users in the office direction in communication with the MGWs through the obtained information comprises:

a first MGW, configured to send packets which indicate each channel of users in the specified office direction in communication with the first MGW to a second MGW through an IP bearer network, in which the packets carry the users' local time and serial numbers, receive the packets sent by the second MGW, obtain the users' packet loss ratio, and calculate the delay and jitter according to the local time of receiving the packets and the timestamp carried in the packets (100,400);
a second MGW, configured to receive the packets sent by the first MGW and obtain the users' packet loss ratio according to the recorded serial number and the received packets, and send packets which indicate each channel of users in the specified office direction in communication with the second MGW to the first MGW through the IP bearer network, in which the packets carry local time and serial number of the second MGW, the time of receiving the packets from the first MGW, and the obtained users' packet loss ratio (200,300).

**Patentansprüche**

1. Verfahren zur Feststellung einer Dienstgüte, umfassend das Erhalten von Informationen in zwischen Medien-Gateways MGWs übertragenen RTCP-Paketen (RTCP - Real-Time Transfer Control Protocol); und Erhalten von Paketverlustverhältnis, Jitter und Laufzeit jedes Kanals von Benutzern in einer Vermittlungsrichtung in Kommunikation mit den MGWs durch die erhaltenen Informationen, wobei die Vermittlungsrichtung durch einen Softswitch in einer zugestellten Nachricht spezifiziert wird;
**dadurch gekennzeichnet, dass** das Verfahren weiterhin Folgendes umfasst:

   Berechnen von mittlerem Paketverlustverhältnis, mittlerer Laufzeit und mittlerem Jitter der Vermittlungsrichtung gemäß dem Paketverlustverhältnis, dem Jitter und der Laufzeit jedes Kanals von Benutzern (500); und Erhalten einer Gesamtdienstgüte der Vermittlungsrichtung gemäß dem mittleren Paketverlustverhältnis, der mittleren Laufzeit und dem mittleren Jitter der Vermittlungsrichtung sowie Gewichtungskoeffizienten des mittleren Paketverlustverhältnisses, der mittleren Laufzeit und des mittleren Jitters der Vermittlungsrichtung, die die Sprachqualität (600) beeinflussen.

2. Verfahren zur Feststellung einer Dienstgüte nach Anspruch 1, wobei der Prozess des Erhaltens von Informationen in dem zwischen MGWs übertragenen Paket und des Erhaltens des Paketverlustverhältnisses, des Jitters und der Laufzeit jedes Kanals von Benutzern in der Vermittlungsrichtung in Kommunikation mit den MGWs durch die erhaltenen Informationen Folgendes umfasst:

   Senden von Paketen durch ein erstes MGW, die jeden Kanal von Benutzern in der spezifizierten Vermittlungsrichtung in Kommunikation mit dem ersten MGW zu einem zweiten MGW durch ein IP-Trägernetzwerk angeben, in dem die Pakete lokale Zeit und Seriennummern der Benutzer führen (100);
   Erhalten des Paketverlustverhältnisses der Benutzer durch das zweite MGW gemäß der aufgezeichneten Seriennummer und den empfangenen Paketen bei Empfang der von dem ersten MGW gesendeten Pakete (200);
   Senden von Paketen durch das zweite MGW, die jeden Kanal von Benutzern in der spezifizierten Vermittlungsrichtung in Kommunikation mit dem zweiten MGW zu dem ersten MGW durch das IP-Trägernetzwerk angeben, in dem die Pakete lokale Zeit und Seriennummer des zweiten MGW, die Zeit des Empfangs der Pakete von dem ersten MGW und das erhaltene Paketverlustverhältnis der Benutzer führen (300); und
   Erhalten des Paketverlustverhältnisses der Benutzer durch das erste MGW und Berechnen der Laufzeit und des Jitters gemäß der lokalen Zeit des Empfangs der Pakete und dem Zeitstempel, in dem Paket geführt, bei Empfang der von dem zweiten MGW gesendeten Pakete (400).

3. Verfahren zur Feststellung einer Dienstgüte nach Anspruch 1 oder 2, wobei das Paketverlustverhältnis auf folgende Weise erhalten wird: von der Menge von Paketen, die in der statistischen Periode empfangen werden sollten, wird die Menge von Paketen, die tatsächlich in der statistischen Periode empfangen werden, subtrahiert, und dann wird die Menge nach dem Subtrahieren durch die Menge von Paketen dividiert, die in der statistischen Periode empfangen werden sollten.

4. Verfahren zur Feststellung einer Dienstgüte nach Anspruch 3, wobei die Menge von Paketen, die in der statistischen Periode empfangen werden sollten, auf folgende Weise erhalten wird: von der maximalen Paketseriennummer in der statistischen Periode wird die maximale Paketseriennummer in der vorausgegangenen statistischen Periode subtrahiert.

5. Verfahren zur Feststellung einer Dienstgüte nach Anspruch 1 oder 2, wobei die Laufzeit gemäß der folgenden Formel berechnet wird:

   $$\text{Laufzeit} = (T4-T1)-(T3-T2),$$

   wobei T 1 die Zeit ist, wenn ein erster MGW ein Paket sendet; T2 die Zeit ist, wenn ein zweiter MGW das Paket empfängt; T3 die Zeit ist, wenn das zweite MGW ein Paket sendet; T4 die Zeit ist, wenn das erste MGW das Paket empfängt.

**6.** Verfahren zur Feststellung einer Dienstgüte nach Anspruch 5, wobei der Jitter gemäß der Änderung der Laufzeit erhalten wird.

**7.** Verfahren zur Feststellung einer Dienstgüte nach Anspruch 1, wobei das mittlere Paketverlustverhältnis, die mittlere Laufzeit und der mittlere Jitter gemäß den folgenden Formeln berechnet werden:

mittleres Paketverlustverhältnis in der spezifizierten Vermittlungsrichtung

$$= \sum_1^{\text{Benutzermenge in spezifizierter Vermittlungsrichtung}} \frac{Paketverlustverhältnis\ jedes\ Benutzers}{Benutzermenge\ in\ spezifizierter\ Vermittlungsrichtung} ;$$

mittlere Laufzeit in der spezifizierten Vermittlungsrichtung

$$= \sum_1^{\text{Benutzermenge in spezifizierter Vermittlungsrichtung}} \frac{Laufzeit\ jedes\ Benutzers}{Benutzermenge\ in\ spezifizierter\ Vermittlungsrichtung} ;\ \text{und}$$

mittlerer Jitter in der spezifizierten Vermittlungsrichtung

$$= \sum_1^{\text{Benutzermenge in spezifizierter Vermittlungsrichtung}} \frac{Jitter\ jedes\ Benutzers}{Benutzermenge\ in\ spezifizierter\ Vermittlungsrichtung} ;$$

wobei Benutzermenge Anzahl von Benutzern bedeutet.

**8.** Verfahren zur Feststellung einer Dienstgüte nach Anspruch 1, 2, 4 oder 6, wobei das Paket periodisch gesendet wird.

**9.** Vorrichtung, wenn programmiert zum Ausführen des Verfahrens nach Anspruch 1 zur Feststellung einer Dienstgüte, umfassend Mittel zum Erhalten von Informationen in zwischen Medien-Gateways MGWs übertragenen RTCP-Paketen (RTCP - Real-Time Transfer Control Protocol); und
Mittel zum Erhalten von Paketverlustverhältnis, Jitter und Laufzeit jedes Kanals von Benutzern in einer Vermittlungsrichtung in Kommunikation mit den MGWs durch die erhaltenen Informationen, wobei die Vermittlungsrichtung durch einen Softswitch in einer zugestellten Nachricht spezifiziert wird;
**dadurch gekennzeichnet, dass** die Vorrichtung weiterhin Folgendes umfasst:

Mittel zum Berechnen von mittlerem Paketverlustverhältnis, mittlerer Laufzeit und mittlerem Jitter der Vermittlungsrichtung gemäß dem Paketverlustverhältnis, dem Jitter und der Laufzeit jedes Kanals von Benutzern (500); und
Mittel zum Erhalten einer Gesamtdienstgüte der Vermittlungsrichtung gemäß dem mittleren Paketverlustverhältnis, der mittleren Laufzeit und dem mittleren Jitter der Vermittlungsrichtung sowie Gewichtungskoeffizienten des mittleren Paketverlustverhältnisses, der mittleren Laufzeit und des mittleren Jitters der Vermittlungsrichtung, die die Sprachqualität (600) beeinflussen.

**10.** Vorrichtung nach Anspruch 9, wobei das Mittel zum Erhalten von Informationen in den zwischen MGWs übertragenen Paketen und Erhalten des Paketverlustverhältnisses, des Jitters und der Laufzeit jedes Kanals von Benutzern in der Vermittlungsrichtung in Kommunikation mit den MGWs durch die erhaltenen Informationen Folgendes umfasst:

ein erstes MGW, konfiguriert zum Senden von Paketen, die jeden Kanal von Benutzern in der spezifizierten Vermittlungsrichtung in Kommunikation mit dem ersten MGW zu einem zweiten MGW durch ein IP-Trägernetzwerk angeben, in dem die Pakete lokale Zeit und Seriennummern der Benutzer führen, Empfangen der von dem zweiten MGW gesendeten Pakete, Erhalten des Paketverlustverhältnisses der Benutzer und Berechnen der Laufzeit und des Jitters gemäß der lokalen Zeit des Empfangs der Pakete und des in den Paketen geführten Zeitstempels (100, 400);

ein zweites MGW, konfiguriert zum Empfangen der von dem ersten MGW gesendeten Pakete und Erhalten des Paketverlustverhältnisses der Benutzer gemäß der aufgezeichneten Seriennummer und den empfangenen Paketen, und Senden von Paketen, die jeden Kanal von Benutzern in der spezifizierten Vermittlungsrichtung in Kommunikation mit dem zweiten MGW zu dem ersten MGW durch das IP-Trägernetzwerk angeben, in dem die Pakete lokale Zeit und Seriennummer des zweiten MGW, die Zeit des Empfangs der Pakete von dem ersten MGW und das erhaltene Paketverlustverhältnis der Benutzer führen (200, 300).

**Revendications**

1.  Procédé de détection de la QoS (Qualité de Service), comprenant l'obtention d'informations dans des paquets d'un Protocole de Commande de Transfert en Temps Réel (RTCP, Real Time Transfer Control Protocol) transférés entre des passerelles multimédia MGW (Media Gateway) ; et

    l'obtention d'un rapport de perte de paquets, d'une gigue et d'un retard de chaque canal d'utilisateurs dans la direction d'un central en communication avec les passerelles MGW au moyen des informations obtenues, la direction du central étant spécifiée par un commutateur logiciel dans un message délivré ;

    **caractérisé en ce que** le procédé comprend en outre :

    le calcul d'un rapport moyen de perte de paquets, d'un retard moyen et d'une gigue moyenne dans la direction du central en fonction du rapport de perte de paquets, de la gigue et du retard de chaque canal d'utilisateurs (500) ; et

    l'obtention de la QoS globale dans la direction du central en fonction du rapport moyen de perte de paquets, du retard moyen et de la gigue moyenne dans la direction du central ainsi que des coefficients de pondération du rapport moyen de perte de paquets, du retard moyen et de la gigue moyenne dans la direction du central, qui affectent la qualité vocale (600).

2.  Procédé de détection de la QoS selon la revendication 1, dans lequel le procédé d'obtention d'informations dans le paquet transféré entre des passerelles MGW, et d'obtention du rapport de perte de paquets, de la gigue et du retard de chaque canal d'utilisateurs dans la direction du central en communication avec les passerelles MGW au moyen des informations obtenues comprend :

    l'envoi, par une première passerelle MGW, de paquets qui indiquent chaque canal d'utilisateurs dans la direction spécifiée du central en communication avec la première passerelle MGW à une seconde passerelle MGW par l'intermédiaire d'un réseau de support IP dans lequel les paquets acheminent le temps local des utilisateurs et des numéros de série (100) ;

    l'obtention, par la seconde passerelle MGW, du rapport de perte de paquets des utilisateurs en fonction du numéro de série enregistré et des paquets reçus, lors de la réception des paquets envoyés par la première passerelle MGW (200) ;

    l'envoi, par la seconde passerelle MGW, de paquets qui indiquent chaque canal d'utilisateurs dans la direction spécifiée du central en communication avec la seconde passerelle MGW à la première passerelle MGW par l'intermédiaire du réseau de support IP, dans lequel les paquets acheminent un temps local et un numéro de série de la seconde passerelle MGW, le moment de réception des paquets en provenance de la première passerelle MGW, et le rapport obtenu de perte de paquets des utilisateurs (300) ; et

    l'obtention, par la première passerelle MGW, du rapport de perte de paquets des utilisateurs, et le calcul du retard et de la gigue en fonction du temps local de réception des paquets et d'un marqueur temporel acheminé dans les paquets, lors de la réception des paquets envoyés par la seconde passerelle MGW (400).

3.  Procédé de détection de la QoS selon la revendication 1 ou la revendication 2, dans lequel le rapport de perte de paquets est obtenu de la manière suivante : la quantité de paquets devant être reçus pendant une période de statistiques permet de déduire la quantité de paquets effectivement reçus pendant la période de statistiques, puis la quantité obtenue après déduction est divisée par la quantité de paquets devant être reçus pendant la période de statistiques.

4.  Procédé de détection de la QoS selon la revendication 3, dans lequel la quantité de paquets devant être reçus pendant la période de statistiques est obtenue de la manière suivante : le numéro de série maximum des paquets pendant la période de statistiques permet de déduire le numéro de série maximum des paquets pendant la période de statistiques précédente.

5. Procédé de détection de la QoS selon la revendication 1 ou 2, dans lequel le retard est calculé conformément à la formule suivante :

$$\text{Retard} = (T4-T1)-(T3-T2)$$

où T1 est le moment d'envoi par une première passerelle MGW d'un paquet ; T2 est le moment de réception par une seconde passerelle MGW du paquet ; T3 est le moment d'envoi par la seconde passerelle MGW d'un paquet ; T4 est le moment de réception par la première passerelle MGW du paquet.

6. Procédé de détection de la QoS selon la revendication 5, dans lequel la gigue est obtenue en fonction de la variation du retard.

7. Procédé de détection de la QoS selon la revendication 1, dans lequel le rapport moyen de perte de paquets, le retard moyen et la gigue moyenne sont calculés conformément aux formules suivantes :

$$\text{rapport moyen de perte de paquets dans la direction spécifiée du central} = \sum_{1}^{\text{quantité d'utilisateurs dans la direction spécifiée du central}} \frac{\text{rapport de perte de paquets de chaque utilisateur}}{\text{quantité d'utilisateurs dans la direction spécifiée du central}} ;$$

$$\text{retard moyen dans la direction spécifiée du central} = \sum_{1}^{\text{quantité d'utilisateurs dans la direction spécifiée du central}} \frac{\text{retard de chaque utilisateur}}{\text{quantité d'utilisateurs dans la direction spécifiée du central}} ,$$

et

$$\text{gigue moyenne dans la direction spécifiée du central} = \sum_{1}^{\text{quantité d'utilisateurs dans la direction spécifiée du central}} \frac{\text{gigue de chaque utilisateur}}{\text{quantité d'utilisateurs dans la direction spécifiée du central}} ,$$

où la quantité d'utilisateurs représente le nombre d'utilisateurs.

8. Procédé de détection de la QoS selon la revendication 1, la revendication 2, la revendication 4, ou la revendication 6, dans lequel le paquet est envoyé périodiquement.

9. Appareil programmé pour mettre en oeuvre le procédé selon la revendication 1 pour détecter la QoS, comprenant un moyen destiné à obtenir des informations dans des paquets d'un Protocole de Commande de Transfert en Temps Réel (RTCP) transférés entre des passerelles multimédia MGW ; et un moyen destiné à obtenir le rapport de perte de paquets, la gigue et le retard de chaque canal d'utilisateurs dans la direction d'un central en communication avec les passerelles MGW au moyen des informations obtenues, la direction du central étant spécifiée par un commutateur logiciel dans un message délivré ; **caractérisé en ce que** l'appareil comprend en outre :

un moyen destiné à calculer un rapport moyen de perte de paquets, un retard moyen et une gigue moyenne dans la direction du central en fonction du rapport de perte de paquets, de la gigue et du retard de chaque canal d'utilisateurs (500) ; et

un moyen destiné à obtenir la QoS globale dans la direction du central en fonction du rapport moyen de perte de paquets, du retard moyen et de la gigue moyenne dans la direction du central ainsi que de coefficients de pondération du rapport moyen de perte de paquets, du retard moyen et de la gigue moyenne dans la direction du central, qui affectent la qualité vocale (600).

10. Appareil selon la revendication 9, dans lequel le moyen destiné à obtenir des informations dans les paquets transférés entre des passerelles MGW, et à obtenir le rapport de perte de paquets, la gigue et le retard de chaque canal d'utilisateurs dans la direction du central en communication avec les passerelles MGW par l'intermédiaire des informations obtenues, comprend :

une première passerelle MGW, configurée pour envoyer des paquets qui indiquent chaque canal d'utilisateurs dans la direction spécifiée du central en communication avec la première passerelle MGW à une seconde passerelle MGW par l'intermédiaire d'un réseau de support IP, dans lequel les paquets acheminent le temps local des utilisateurs et des numéros de série, recevoir les paquets envoyés par la seconde passerelle MGW, obtenir le rapport de perte de paquets des utilisateurs, et calculer le retard et la gigue en fonction du temps local de réception des paquets et du marqueur temporel acheminé dans les paquets (100, 400) ;

une seconde passerelle MGW, configurée pour recevoir les paquets envoyés par la première passerelle MGW et obtenir le rapport de perte de paquets des utilisateurs en fonction du numéro de série enregistré et des paquets reçus, et envoyer des paquets qui indiquent chaque canal d'utilisateurs dans la direction spécifiée du central en communication avec la seconde passerelle MGW à la première passerelle MGW par l'intermédiaire du réseau de support IP, dans lequel les paquets acheminent un temps local et un numéro de série de la seconde passerelle MGW, le moment de réception des paquets en provenance de la première passerelle MGW, et le rapport obtenu de perte de paquets des utilisateurs (200, 300).

Figure 1

Figure 2

100

Under the control of softswitch 1, a channel of user in the specified direction on MGW1 sends an RTCP packet to the IP bearer network periodically.

200

MGW2 receives the RTCP packet, records the information about the received packet such as timestamp and serial number of the packet, and calculates the user's packet loss ratio.

300

MGW2 sends an RTCP packet to MGW1, in which the RTCP packet carries the local time and serial number of MGW2, the time of receiving the RTCP packet from MGW1 and the packet loss ratio obtained through calculation.

400

Upon receiving the RTCP packet sent by MGW2, MGW1 obtains the user's packet loss ratio, and calculates out the delay and jitter according to the local time of receiving the packet and the timestamp carried in the packet.

500

Each other channel of user in the specified office direction repeats steps 3-5, and calculates out the average packet loss ratio, average delay and average jitter of the office direction through the average algorithm according to the packet loss ratio, delay and jitter of each user.

600

The overall QoS of the office direction is calculated out according to the average packet loss ratio, average delay and average jitter of the office direction as well as the weight coefficient of the foregoing three indices affecting the voice quality.

Figure 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 200610062951
- US 2003206517 A1
- US 6678250 B1